# EUROPÄISCHE PATENTSCHRIFT

(11) **EP 0 851 817 B1**
(45) Veröffentlichungstag und Bekanntmachung des Hinweises auf die Patenterteilung: **24.04.2002**
(21) Anmeldenummer: 96933361.6
(22) Anmeldetag: 23.09.1996
(51) Int. Cl.: B60R 21/16

(54) **AUFBLASBARER GASSACK UND VERFAHREN ZU DESSEN HERSTELLUNG**
INFLATABLE AIRBAG AND A METHOD OF MANUFACTURING THE SAME
SAC GONFLABLE ET SON PROCEDE DE FABRICATION

(30) Priorität: 22.09.1995 DE 19535184; 28.12.1995 DE 19548979
(43) Veröffentlichungstag der Anmeldung: 08.07.1998
(73) Patentinhaber: Rychter, Josef, 96191 Trunstadt (DE)
(72) Erfinder: RYCHTER, Joseph, D-96191 Trunstadt (DE); LEHMANN, Wilhelm, Karl, D-88364 Wolfegg (DE)
(74) Vertreter: Beyer, Andreas, Dr.
(86) Internationale Anmeldenummer: EP9604150
(87) Internationale Veröffentlichungsnummer: WO9710973

(56) Entgegenhaltungen:
- EP-A- 0 489 320
- EP-A- 0 496 894
- WO-A-90/15713
- DE-A- 4 142 884
- DE-U- 8 907 391
- GB-A- 2 199 281
- US-A- 4 994 225
- US-A- 5 044 663

## Beschreibung

Die Erfindung betrifft einen aufblasbaren Gassack für ein Insassenrückhaltesystem in einem Fahrzeug und ein Verfahren zur Herstellung eines solchen Gassackes.

Insassenrückhaltesysteme mit Gassäcken, häufig auch Airbags genannt, die bei einem schweren Unfall selbsttätig aufgeblasen werden, sind heutzutage bereits in eine Vielzahl von Personenkraftwagen sowohl auf der Fahrerseite als auch auf der Beifahrerseite eingebaut, um mögliche Kopf- und Brustverletzungen der vorne sitzenden Fahrzeuginsassen bei einem schweren Frontalaufprall des Fahrzeuges möglichst zu vermeiden. Zunehmend werden solche im wesentlichen aus einem meist pyrotechnischen Gasgenerator und einem Gassack sowie der zugehörigen Steuerelektronik bestehenden Systeme auch im seitlichen Bereich von Personenkraftwagen eingesetzt, um die bei einem Seitenaufprall auf das Fahrzeug einwirkenden Kräfte zu dämpfen und großflächiger zu verteilen und damit das Verletzungsrisiko des sich auf der Aufprallseite befindenden Fahrzeuginsassen herabzusetzen. Solche seitlich angeordneten Aufprallschutzsysteme mit Gassack, die auch als Sidebags bezeichnet werden, sind beispielsweise in den Fahrzeugtüren oder in den Sitzlehnen untergebracht.

Aufgrund der bisher mit solchen einen Gassack aufweisenden Aufprallschutzsystemen gemachten überwiegend positiven Erfahrungen besteht die Tendenz, solche Systeme verstärkt auch in Lastkraftwagen und Omnibussen einzusetzen.

Je nachdem, welche Aufgabe der Gassack eines Insassenrückhaltesystems der vorgenannten Art erfüllen soll, muß der Gassack im aufgeblasenen Zustand zur Erzielung einer optimalen Wirkung eine genau definierte Form haben. So sind beispielsweise die sogenannten Fahrer-Airbags im aufgeblasenen Zustand näherungsweise ballonförmig, während die sogenannten Beifahrer-Airbags im aufgeblasenen Zustand näherungsweise kissenförmig sind. Seiten-Airbags wiederum weisen häufig noch komplizierte Formen auf, um den an sie gestellten Anforderungen gerecht werden zu können.

Darüber hinaus müssen Gassäcke allgemein zwei sich widersprechende Forderungen erfüllen: Einerseits sollen sie im Bedarfsfall möglichst schnell aufblasbar sein, andererseits sollen sie einen möglichst großen Abstand zwischen dem zu schützenden Fahrzeuginsassen und dem Gegenstand bilden, auf den der Fahrzeuginsasse nicht aufprallen soll. Während die erste Forderung ein kleines Gassackvolumen bedingt, führt die zweite Forderung zu einem relativ großen Gassackvolumen. Aufprallschutzsysteme mit einem Gassack haben ihre Existenzberechtigung allerdings nur dann, wenn ihre Schutzwirkung möglichst hoch ist, so daß heutzutage große Gassackvolumina bevorzugt werden, um eine möglichst gute Schutzwirkung zu erzielen.

Herkömmliche Gassäcke bestehen aus zwei oder mehr einzelnen Textilteilen, die aus textilem Flachmaterial zurechtgeschnitten und anschließend miteinander vernäht werden. Für einen Fahrer-Airbag werden demnach in der Regel zwei kreisförmig konfektionierte, flächige Textilteile miteinander vernäht. Beim Aufblasen dieser herkömmlich hergestellten Gassäcke in ihren dreidimensionalen Zustand, den sie zur Erzielung der gewünschten Schutzwirkung einnehmen müssen, kommt es besonders im Nahtbereich zur Bildung von Falten senkrecht zu den Nähten. Diese Falten führen zu hohen Spannungsspitzen im durch die Naht ohnehin schon geschwächten Nahtbereich. Um zu vermeiden, daß der Gassack unter Belastung im Nahtbereich auseinanderreißt, werden sehr schwere Gewebe zur Herstellung des Gassackes verwendet. Diese schweren Gewebe führen im Zusammenspiel mit den zur Erzielung einer guten Schutzwirkung gewählten, relativ großen Gassackvolumina dazu, daß herkömmliche Gassäcke relativ schwer sind. Um dennoch das im Bedarfsfall erforderliche schnelle Aufblasen garantieren zu können, müssen größere Gasgeneratoren eingesetzt werden, die dazu in der Lage sind, die relativ große Masse des Gassackes entsprechend schnell zu beschleunigen. Große pyrotechnische Gasgeneratoren wiederum haben den Nachteil, daß beim Aufblasvorgang die Temperatur des vom Gasgenerator entwickelten Gases sehr hohe Werte erreicht und diese hohen Temperaturen auf den Gassack einwirken und sein Gewebe zerstören können. Hinzu kommt, daß ein Gassack mit größerer Masse sich aufgrund seiner höheren Trägheit erst später entfaltet, so daß die heißen, vom Gasgenerator entwickelten Gase länger auf das noch zusammengefaltete und sich nahe am Gasgenerator befindende Gewebe einwirken. Damit das Gassackgewebe durch diesen Beschuß der Verbrennungsgase nicht zerstört wird, werden große Garndicken (etwa 250 bis 700 dtex) eingesetzt, die sicherstellen, daß das Gewebe selbst dann nicht versagt, wenn glühende Partikel auf das Gewebe auftreffen und einzelne Garne anschmelzen.

Die relativ große Masse herkömmlicher Gassäcke muß natürlich nicht nur beschleunigt, sondern am Ende des Aufblasvorganges auch wieder abgestoppt werden. Auch hierbei treten hohe Belastungen - insbesondere im Nahtbereich - auf, die durch entsprechend verstärkte Nähte oder durch Mehrfachnähte aufgefangen werden müssen. Diese Maßnahmen führen wiederum zu einer Erhöhung des Gassackgewichtes.

Die herkömmlicherweise verwendeten, schweren Gewebe haben aber nicht nur dynamische Nachteile, sie erzwingen darüber hinaus ein relativ großes Packvolumen, auch weil sie zumeist relativ steif sind. Besonders steif sind naturgemäß die Nahtbereiche, die deshalb zu unerwünschten Verletzungen, wie beispielsweise Hautabschürfungen am zu schützenden Fahrzeuginsassen führen können, wenn der Fahrzeuginsasse eine sogenannte out-of-position Lage einnimmt, während der Gassack sich entfaltet. Als out-of-position Lage wird in der Fachsprache jede Lage bezeichnet, die nicht der optimalen Position zum Gassack entspricht, beispielsweise also ein sich zu nahe am Gassack oder auch seitlich davon befindlicher Fahrzeuginsasse. Bei solchen out-of-position Lagen ist die Gefahr besonders hoch, von einem steifen Nahtbereich des Gassackes voll getroffen zu werden.

Zur Erfüllung seiner Schutzfunktion muß ein Gassack zwei weitere, sich ebenfalls widersprechende Forderungen erfüllen: Wie bereits erwähnt, soll er möglichst schnell aufblasbar sein. Diese Forderung läßt sich grundsätzlich nur mit einem sehr dichten Gassack erreichen, denn nur dann ist gewährleistet, daß das vom Gasgenerator entwickelte Gas vollständig zum Aufblasen verwendet werden kann. Andererseits soll der Gassack im aufgeblasenen Zustand den Aufprall eines Fahrzeuginsassen dämpfen. Hierzu muß der Gassack ein definiertes Abblasen seiner Gasfüllung gestatten, da sonst der auftreffende Fahrzeuginsasse zurückgeschleudert würde. Herkömmliche Gassäcke sind deshalb auf ihrer vom Fahrzeuginsassen abgewandten Seite mit Öffnungen versehen, die einen Durchmesser von bis zu 50 mm aufweisen können. Diese Öffnungen werden auch als "vents" bezeichnet. Da diese Öffnungen während des Aufblasvorgangs nicht verschlossen sind, entweicht durch sie erheblicher Teil des vom Gasgenerator entwickelten Gases, so daß der Gasgenerator entsprechend leistungsfähiger, d.h. größer, ausgeführt sein muß, um den Gassack zuverlässig aufblasen zu können. Große Gasgeneratoren aber führen zu den oben bereits erläuterten thermischen Belastungen des Gassackgewebes.

Schlußendlich sind die herkömmlich eingesetzten, schweren Gewebe aufgrund der verwendeten, relativ großen Garndicken nicht besonders dicht, weshalb diese Gewebe in aller Regel zusätzlich beschichtet werden müssen, um die erforderliche Dichtigkeit zu erhalten. Die Beschichtungen jedoch haben häufig das Problem einer mangelnden Alterungsstabilität, so daß die einwandfrei Funktion des Gassackes nach vielen Jahren unter Umständen nicht mehr gewährleistet ist.

Obwohl also bekannte Aufprallschutzsysteme mit Gassäcken die Insassensicherheit entscheidend verbessern und deshalb zu Recht immer mehr zum Einsatz gelangen, haften diesen Systemen eine ganze Reihe von Nachteilen an, die eine noch bessere Schutzwirkung verhindern und darüber hinaus die Herstellungskosten bisheriger Systeme erhöhen.

Aus der DE-A-41 42 884 ist ein Airbag gemäß dem Oberbegriff des Anspruchs 1 mit einem oberen Hüllenteil und einem unteren Hüllenteil bekannt, die an den Rändern miteinander verbunden sind. Das obere Hüllenteil besteht aus einem luftdichten Bahnmaterial, das aus einem Gewebe aus Zweikomponenten-Verbundfasern hergestellt ist. Die eine Komponente der Verbundfasern ist ein thermoplastisches Polymer, dessen Schmelzpunkt niedriger als der Schmelzpunkt der anderen Faserkomponente ist. Durch Erhitzen und erforderlichenfalls Pressen des Flachgewebes aus diesen Verbundfasern wird das niedrig schmelzende Polymermaterial der Verbundfasern geschmolzen, dringt in die Zwischenräume des Gewebes ein und versiegelt sie. Gemäß einem Ausführungsbeispiel kann das Flachgewebe auch zweilagig sein. Aus dem durch Heißpressen hergestellten Gewebe werden anschließend durch Ausstanzen die gewünschten Gewebestücke erhalten, die an ihren Rändern dann miteinander verbunden werden, um den Airbag zu bilden. Das Heißpressen und Ausstanzen kann auch in einem Arbeitsgang erfolgen.

Der Erfindung liegt die Aufgabe zugrunde, herkömmliche Aufprallschutzsysteme mit Gassäcken so zu verbessern, daß bei höherer Schutzwirkung möglichst viele der obengenannten Probleme gelöst sind.

Diese Aufgabe ist erfindungsgemäß durch einen aufblasbaren Gassack für ein Insassenrückhaltesystem gelöst, der aus einem mehrlagigen Textilverbundmaterial besteht, welches zumindest eine Lage aus einem Textilmaterial und eine Lage aus einem Polymermaterial umfaßt, dessen Schmelzbereich niedriger als der Schmelzbereich des Textilmaterials ist, wobei das Textilverbundmaterial in eine vorgegebene Raumform geformt ist, die beim Aufblasen des Gassackes entstehen soll, und die einzelnen Lagen des Textilverbundmaterials erst in der Raumform des Gassackes miteinander verbunden worden sind.

Der erfindungsgemäße Gassack unterscheidet sich demnach von bisher bekannten Gassäcken ganz wesentlich: Er ist bereits bei seiner Herstellung in diejenige Raumform geformt, die er im aufgeblasenen Zustand einnehmen soll. In dieser Raumform ist der erfindungsgemäße Gassack durch thermische Behandlung fixiert. Im Gegensatz zu herkömmlichen Gassäcken, die aus zweidimensionalen Flächengebilden zusammengesetzt bzw. zusammengenäht sind, kommt es daher beim Aufblasen des erfindungsgemäßen Gassackes nicht mehr zu der beschriebenen Faltenbildung, durch die bei den herkömmlichen Gassäcken gefährliche Spannungsspitzen im Gewebe entstehen.

Dadurch, daß der erfindungsgemäße Gassack bei der Herstellung in seinen dreidimensionalen Funktionszustand geformt wird, kann die Festigkeit seines Materials im Vergleich zu bisher eingesetzten Materialien deutlich niedriger gewählt werden, da der Spannungsverlauf im Gassackmaterial bei einem erfindunsgemäßen Gassack viel gleichförmiger ist. Erfindungsgemäß können deshalb wesentlich leichtere Textilien als Gassackmaterial zum Einsatz kommen. Das Formen des erfindungsgemäßen Gassackes in seinen dreidimensionalen Funktionszustand während der Herstellung führt neben dem zuvor beschriebenen Vorteilen einer gleichmäßigeren Spannungsverteilung aber auch dazu, daß das Gassackvolumen im Vergleich zu herkömmlichen Gassäcken bei gleicher Schutzwirkung vermindert werden kann, denn ein erfindungsgemäßer Gassack kann beispielsweise in eine eiförmige Gestalt vorgeformt werden und auf diese Weise den gleichen Abstand überbrücken, für den herkömmlich ein kugelförmiger Gassack mit entsprechend größerem Volumen erforderlich ist.

Die erfindungsgemäße Verwendung eines mehrlagigen Textilverbundmaterials führt zu weiteren Vorteilen: Die nunmehr einsetzbaren, leichteren Textilmaterialien brauchen nicht mehr beschichtet zu werden, sondern sie erhalten ihre Dichtigkeit statt dessen durch die Lage aus Polymermaterial, die erst in der gewünschten Raumform des Gassackes mit der oder den Lagen aus Textilmaterial verbunden wird. Durch eine geeignete Temperatursteuerung während des Verbindungsvorgangs kann darüber hinaus dem entstehenden Textilverbundmaterial eine definierte Gaspermeabilität verliehen werden, die sogar örtlich verschieden eingestellt werden kann. Es können also beispielsweise auf der vom Insassen abgewandten Seite des Gassackes Bereiche mit höherer Gaspermeabilität erzeugt werden, so daß die bisher üblichen Abblasöffnungen unnötig sind. Durch den Wegfall der bisher üblichen Abblasöffnungen sind zum einen die Aufblasverluste beim erfindungsgemäßen Gassack viel geringer, was die Verwendung eines kleineren Gasgenerators möglich macht, und zum anderen wird der Gassack wiederum leichter, weil die bisher üblichen Abblasöffnungen aus Stabilitätsgründen mit einer oder mehreren Nähten umsäumt sind.

Des weiteren kann durch eine örtlich verschiedene Einstellung der Permeabilität des Textilverbundmaterials die Aufblasdynamik des erfindungsgemäßen Gassackes beeinflußt werden, d.h. es kann gezielt die Gestalt während des Aufblasens gesteuert werden. Damit läßt sich beispielsweise die bisher häufig auftretende und unerwünschte "Pilzbildung" (pilzförmiges Herausschießen des Gassackes in der Anfangsphase des Aufblasvorgangs) vermeiden. Auf Fangbänder im Gassack, die bisher zur Verhinderung der "Pilzbildung" eingesetzt wurden, kann bei einem erfindungsgemäßen Gassack verzichtet werden, was diesen wiederum leichter macht. Die genau definierbare Permeabilität des erfindungsgemäß eingesetzten Textilverbundmaterials erlaubt zudem ein gesteuertes Abblasen des aufgeblähten Gassakkes und damit eine nahezu lineare Dämpfung der Bewegung des aufprallenden Insassen. Anders ausgedrückt kann dem erfindungsgemäßen Gassack eine genau definierte Formänderungsenergieaufnahme mitgegeben werden.

Zusammengefaßt bietet der erfindungsgemäße Gassack selbst in seiner einfachsten Ausführungsform folgende Vorteile:
- Während bisher verwendete Gassackgewebe beispielsweise für einen Gassack auf der Fahrerseite Flächengewichte von ca. 180 g/cm² bis 220 g/cm² aufweisen, hat das erfindungsgemäß eingesetzte mehrlagige Textilverbundmaterial im geformten Zustand ein 30 bis 100 % niedrigeres Flächengewicht.
- Während bisher verwendete Gassackgewebe Zugfestigkeiten von ca. 1.800 bis 2.200 N/5 cm (nach DIN 53857 T.1) besitzen, braucht das mehrlagige Textilverbundmaterial des erfindungsgemäßen Gassackes nur noch ca. 25 bis 50 % dieser Zugfestigkeit aufzuweisen.
- Während die bisher eingesetzten Garndicken ca. 250 bis 700 dtex betragen, können die Garndicken des beim erfindungsgemäßen Gassack eingesetzten Textilmaterials in einem Bereich von ca. 20 bis ca. 40 dtex liegen.
- Der erfindungsgemäße Gassack kann bei gleichzeitiger Volumenminimierung in jede sicherheitstechnisch gewünschte Form gebracht werden.
- Der erfindungsgemäße Gassack ist aufgrund seiner überlegenen Konstruktion insgesamt deutlich leichter als bisherige Gassäcke und ermöglicht so die Verwendung kleinerer Gasgeneratoren.
- Der erfindungsgemäße Gassack benötigt ein spürbar geringeres Packvolumen, was es den Fahrzeugherstellern beispielsweise ermöglicht, Gassäcke mit großem Volumen auch in kleineren, optischen ansprechenderen Lenkradnaben unterzubringen, wie sie etwa bei Sportlenkrädern üblich sind.

Gemäß einer fertigungstechnisch und auch funktionell bevorzugten Ausgestaltung besteht der erfindungsgemäße Gassack aus mehreren Teilabschnitten, die je in einen Teil der Raumform des Gassackes geformt und in der Raumform des Gassackes miteinander verbunden sind, insbesondere durch Überlappungs-Verschweißen. Ein für die Fahrerseite gedachter Gassack ist nach dieser Ausgestaltung bevorzugt aus zwei z.B. näherungsweise halbkugelförmigen Teilabschnitten zusammengesetzt. Eine solche Ausgestaltung gestattet es, für die dem Insassen zugewandte Seite des Gassackes ein anderes Textilmaterial zu verwenden als für die vom Insassen abgewandte Gassackseite, wodurch eine optimale Anpassung des Textilmaterials an unterschiedliche Anforderungen vorgenommen werden kann. Zur Verbindung der einzelnen Teilabschnitte können grundsätzlich alle bekannte Verbindungsschweißtechniken (mit oder ohne in den Überlappungsbereich eingelegtem Hilfsband) verwendet werden. Darüber hinaus können die einzelnen Teilabschnitte auch miteinander verklebt oder vernäht werden. Die zuletzt genannte Verbindungsart wird allerdings als am wenigsten vorteilhaft angesehen.

Die erfindungsgemäß vorgesehene Lage aus einem Polymermaterial kann durch eine Kunststoffolie oder durch ein Kunststoffvlies gebildet sein. Dabei kann die Lage aus Polymermaterial selbst aus mehreren Schichten bestehen, beispielsweise aus zwei dünnen Schichten eines Schmelzklebers, zwischen denen eine Kunststoffolie angeordnet ist. Die Schichten aus Schmelzkleber wiederum können als dünne Fliese ausgeführt sein (sogenannter Hotmelt-Vlies). Durch einen solchen mehrschichtigen Aufbau der Lage aus Polymermaterial bleibt der Verbindungsbereich auch nach dem Verschweißen noch weich und biegsam, weil die mittlere Schicht der Polymerlage nicht bis zum Fließzustand erhitzt zu werden braucht. Statt dessen werden nur die dünnen Schmelzkleberschichten bis zum Fließen erhitzt und sorgen für die gewünschte, innige Verbindung des Textilverbundmaterials.

Gemäß einer besonders bevorzugten Ausgestaltung des erfindungsgemäßen Gassackes umfaßt das Textilverbundmaterial wenigstens zwei Lagen aus Textilmaterial zwischen denen sich die Lage aus Polymermaterial befindet. Diese Ausgestaltung ermöglicht es, das Textilmaterial auf der Gassackinnenseite verschieden von dem Textilmaterial auf der Gassackaußenseite zu wählen und so den verschiedenen Anforderungen (Temperaturbeständigkeit innen, Weichheit außen, etc.) besser anzupassen. Darüber hinaus ermöglicht es diese Ausgestaltung aber auch, die Eigenschaften des erfindungsgemäß verwendeten Textilverbundmaterials isotroper zu gestalten, indem die zwei Lagen aus Textilmaterial um einen definierten Winkel gegeneinander verdreht zusammengefügt werden, um so beispielsweise die biaxialen Dehnungsunterschiede auszugleichen. Selbstverständlich können auch drei oder mehr Lagen aus Textilmaterial verwendet werden, um eine noch höhere Isotropie zu erreichen. Zwischen je zwei Lagen aus Textilmaterial ist dann immer eine Lage aus Polymermaterial angeordnet. Zur Erzielung einer besseren Isotropie brauchen die einzelnen Lagen aus Textilmaterial nicht aus unterschiedlichem Material bestehen, sie können selbstverständlich aus dem gleichen Textilmaterial bestehen.

Als Textilmaterial kann beim erfindungsgmäßen Gassack ein Gestrick, Gewirk oder Gewebe verwendet werden. Bevorzugt werden jedoch Maschenwaren verwendet, also Gewirke oder Gestricke, weil sich im dreidimensionalen Funktionszustand des Gassackes mit Maschenwaren auch bei nur wenigen Textillagen eine sehr gute Isotropie erreichen läßt. Gewebe hingegen haben immer eine Kett- und eine Schußrichtung, wodurch das Erzielen einer hohen Isotropie erschwert ist.

Um die Wiederverwertbarkeit eines erfindungsgmäßen Gassackes zu erleichtern, bestehen bevorzugt die Lagen aus Textilmaterial und das Polymermaterial aus dem gleichen Werkstoff, beispielsweise aus Polyamid oder aus Polyester.

Die eingangs angeführten Probleme herkömmlicher Aufprallschutzsysteme mit Gassäcken werden erfindungsgemäß auch durch ein Verfahren zur Herstellung eines aufblasbaren Gassackes gelöst, bei dem ein Schichtengebilde aus zumindest einer Lage Textilmaterial und einer Lage Polymermaterial, dessen Schmelzbereich niedriger als der Schmelzbereich des Textilmaterials ist, mittels beheizter Formwerkzeuge in die gewünschte, beim Aufblasen des Gassackes entstehende Raumform oder eines Teilabschnittes davon geformt, thermisch in diesem Zustand fixiert und gleichzeitig zu einem Textilverbundmaterial laminiert wird. Dieses Verfahren ist besonders gut dazu geeignet, einen zuvor beschriebenen, erfindungsgemäßen Gassack herzustellen.

Bei dem erfindungsgmäßen Herstellungsverfahren wird das untereinander noch nicht fest miteinander verbundene Schichtengebilde zwischen üblicherweise zwei beheizten Formwerkzeugen in die angestrebte Raumform gebracht, die dem vollständigen Gassack oder einem Teilabschnitt davon entsprechen kann, und wird dann in diesem Zustand gleichzeitig thermisch fixiert und zu einem Textilverbundmaterial laminiert. Es handelt sich beim erfindungsgemäßen Verfahren demnach um eine dreidimensionales Textillaminierformverfahren. Bei dem erfindungsgemäßen Herstellungsver-fahren für Gassäcke ist darauf zu achten, daß zwischen den Formwerkzeugen kein zu starker Preßdruck erzeugt wird, damit das entstehende Textilverbundmaterial seine textilen Eigenschaften möglichst weitgehend behält.

Die thermische Fixierung der erhaltenen Raumform wird dadurch erreicht, daß die Temperatur der Formwerkzeuge gerade so gewählt wird, daß das Textilmaterial nicht anschmilzt oder beschädigt wird, in der gewünschten Raumform jedoch fixiert wird. Gegebenenfalls kann das thermische Fixieren durch chemische Hilfsstoffe und/oder durch mechanische Reibbewegungen der Formwerkzeuge unterstützt werden. Durch den so erzeugten Verbund weist das Textilverbundmaterial des erfindungsgemäßen Gassackes eine extrem hohe Festigkeit bei niedrigem Gewicht auf. Das Flächengewicht des eingesetzten Textilverbundmaterials beträgt im dreidimensionalen Funktionszustand bevorzugt ca. 100 g/m² bis ca. 150 g/m².

Angeschmolzen wir erfindungsgemäß nur die Lage aus Polymermaterial, um eine innige Verbindung mit der Textillage oder den Textillagen einzugehen. Das Anschmelzen der Lage aus Polymermaterial kann so gesteuert werden, daß gleichzeitig auch die Permeabilität des entstehenden Textilverbundmaterials genau eingestellt wird. Dabei kann die Temperatur lokal unterschiedlich so geregelt werden, daß örtlich verschiedene Gaspermeabilitäten erhalten werden. Zusätzlich oder alternativ zur Möglichkeit, durch die Temperatursteuerung des erfindungsgemäßen Herstellungsverfahrens die Gaspermeabilität des Gassackes einzustellen, besteht auch die Möglichkeit, beim Form-, Fixier- und Laminiervorgang eine gezielte, mechanische Perforation des Schichtengebildes bzw. des entstehenden Textilverbundmaterials vorzunehmen, beispielsweise durch ein mit Nadeln versehenes Formwerkzeug.

Soll der Gassack aus mehreren Teilabschnitten zusammengesetzt sein, dann werden gemäß dem erfindungsgemäßen Herstellungsverfahren diese einzelnen Teilabschnitte in der gewünschten Raumform des Gassackes miteinander verbunden, vorzugsweise durch Überlappungs-Verschweißen. Gegenüber der bisher üblichen Nähtechnik, die an Nahtstellen höhstens 50 bis 60 % der Gewebefestigkeit erreicht, wird beim Überlappungs-Verschweißen auch an den Verbindungsstellen zumindest nahezu die Festigkeit des restlichen Textilverbundmaterials erreicht. Dies führt zu einer signifikanten Gewichtseinsparung eines mittels des erfindungsgemäßen Verfahrens hergestellten Gassackes. Des weiteren können die Ränder der einzelnen mittels des erfindungsgemäßen Verfahrens hergestellten Teilabschnitte des Gassackes exakt gesäumt werden, wobei der Saum nicht wie bisher üblich nach außen oder innen absteht, sondern sich in der Raumform des Gassackes befindet. Beim Zusammenfügen der einzelnen Teilabschnitte entsteht deshalb kein abstehender Nahtsaum, sondern der Verbindungsbereich befindet sich ebenfalls in der Hüllfläche des Gassackes. Auf diese Weise wird eine präzise Überlappungs-Verschweißung einzelner Teilabschnitte möglich. Eine durch Überlappungs-Verschweißung erhaltene Verbindung zweier Teilabschnitte ist zudem fester und leichter als eine übliche Nähnaht.

Das erfindungsgemäße Herstellungsverfahren gestattet es, die einzelnen Textillagen während des Formvorgangs bis auf eine auch örtlich definierte Restelastizität zu verstrecken. Wie bereits im Zusammenhang mit dem zuvor beschriebenen, erfindungsgemäßen Gassack erläutert, kann so die Aufblasdynamik des Gassackes gezielt beeinflußt werden. Darüber hinaus führt das Verstrecken der Textillagen zu einer Zugfestigkeitserhöhung des Textilverbundmaterials.

Das erfindungsgemäße Herstellungsverfahren läßt sich mit Textilmaterialien aus allen gängigen Synthetikfasern, aber auch mit Textilmaterialien aus Naturfasern, z.B. aus merzerisierter Baumwolle durchführen. Wichtig ist, daß der Schmelzbereich der Polymerlage(n) niedriger, vorzugsweise nur wenig niedriger, als der Schmelzbereich des Textilmaterials ist. Es wurden bereits eine Reihe erfolgreicher Versuchsmuster sowohl aus Polyamid- als auch aus Polyestertextilien gefertigt. Solche Textilien weisen im allgemeinen einen Schmelzbereich von ca. 210 bis 240°C auf. Die beim erfindungsgemäßen Herstellungsverfahren bei Verwendung solcher Textilmaterialien zu wählende Temperatur liegt deshalb in einem Bereich von etwa 180 bis 210°C, so daß das Textilmaterial nicht beschädigt, die Lage aus Polymermaterial jedoch angeschmolzen wird.

Mittels des erfindungsgemäßen Verfahrens lassen sich die zuvor beschriebenen, erfindungsgemäßen Gassäcke mit ihren vorteilhaften Eigenschaften herstellen. Die Herstellungskosten sind dabei trotz der Erzeugung eines mehrlagigen Textilverbundmaterials aufgrund dessen deutlich geringeren Flächengewichtes niedriger als die Herstellungskosten für herkömmliche Gassäcke, die die schweren Textilien verwenden müssen.

Obwohl das soeben beschriebene Herstellungsverfahren obenstehend unter Bezugnahme auf Gassäcke für Aufprallschutzsysteme erläutert worden ist, ist dem Fachmann klar, daß dieses Herstellungsverfahren mit großem Vorteil auch für andere Formteile aus Textilmaterialien eingesetzt werden kann. Beispielsweise können textile Formteile für Arbeits-, Sport- und Freizeitbekleidungsstücke oder auch für Behältnisse aus Textilmaterial, beispielsweise für Rucksäcke oder Taschen, hergestellt werden. Es bietet sich z.B. an, die Schulterpartien von Bekleidungsstücken, die regendicht und dennoch atmungsaktiv sein sollen, mittels des erfindungsgemäßen Verfahrens herzustellen. Auf diese Weise kann die auf der Schulter bisher übliche Naht entfallen, die zu Dichtigkeitsproblemen führt oder aufwendig separat abgedichtet werden muß. Das erfindungsgemäße Verfahren eignet sich also besonders für die Herstellung von textilen Formteilen, die in der einen Richtung wasserdampfdurchlässig sein sollen, um beispielsweise den bei starker körperlicher Tätigkeit durch Schwitzen entstehenden Wasserdampf abführen zu können, und die in der anderen Richtung wasserundurchlässig sein sollen, um beispielsweise eine Schutz gegen Regen zu bieten.

Die Erfindung wird im folgenden anhand schematischer Zeichnungen eines bevorzugten Ausführungsbeispieles eines erfindungsgemäßen Gassackes näher erläutert. Es zeigt:
- Fig. 1: einen herkömmlichen Gassack für ein Aufprallschutz-system in einem Fahrzeug,
- Fig. 2: einen erfindungsgemäß hergestellten, aus zwei Teilabschnitten zusammengefügten Gassack,
- Fig. 3: den Verbindungsbereich (Detail 3) zwischen den beiden Teilabschnitten des Gassackes aus Figur 2 im Schnitt und in vergrößerter Darstellung,
- Fig. 4: den Schnitt durch ein erfindungsgemäß verwendetes Textilverbundmaterial,
- Fig. 5: die Verbindung zweier erfindungsgemäß hergestellter Gassackhälften,
- Fig. 6: die erfindungsgemäße Herstellung einer Gassackhälfte, und
- Fig. 7: ein Beispiel für ein Herstellungswerkzeug zur Fertigung eines erfindungsgemäßen Gassackes aus nur einem Teil.

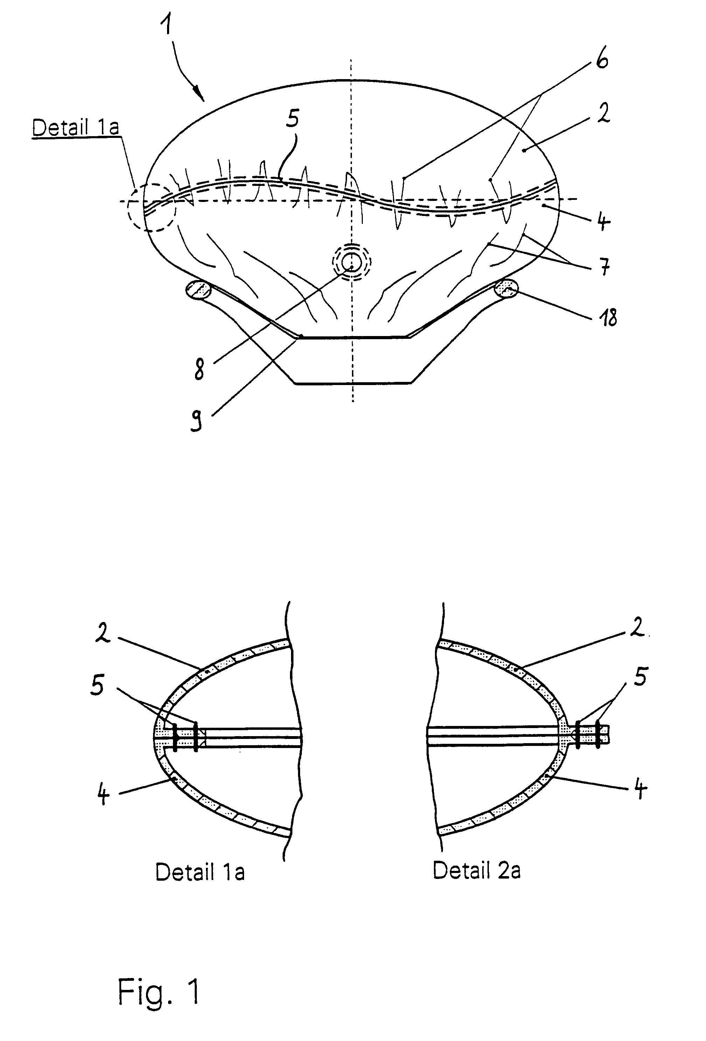

Figur 1 zeigt einen aus dem Stand der Technik bekannten, in herkömmlicher Weise hergestellten Gassack 1 eines in einem Kraftfahrzeug auf der Fahrerseite angeordneten Aufprallschutzsystems, auch Fahrer-Airbag genannt. Der Gassack 1 besteht aus einer dem Fahrer zugewandten, oberen Hälfte 2 und einer vom Fahrer abgewandten, unteren Hälfte 4. Die beiden Hälften 2, 4 sind mittels einer im gezeigten Beispiel als Doppelnaht ausgeführten Nähnaht 5 miteinander verbunden. Die Nähnaht 5 bildet einen im wesentlichen rechtwinklig vom Gassack 1 abstehenden Saum, der sich gemäß den Detailzeichnungen 1a und 2a entweder in das Innere des Gassackes 1 oder vom Gassack 1 nach außen erstreckt. Beide Hälften 2, 4 sind aus Textilflachmaterial konfektionierte, kreisscheibenförmige Textilteile.

Aus Figur 1, die den Gassack 1 im aufgeblähten Zustand darstellt, ist gut ersichtlich, daß durch die beim Aufblähvorgang auftretende Verformung der ebenflächigen, die beiden Hälften 2 und 4 bildenden Textilteile in den dreidimensionalen Zustand eine Vielzahl von Falten 6 im Verbindungsbereich der beiden Hälften 2 und 4 sowie von Falten 7 entstehen, die sich vom Anschlußkegel des Gassackes 1 über dessen untere Häflte 4 erstrecken. Die Falten 6 verlaufen im wesentlichen senkrecht zur Nähnaht 5 und haben ebenso wie die Falten 7 unerwünschte Spannungspitzen im Gassackgewebe zur Folge.

In der unteren Hälfte 4 des Gassackes 1 ist weiterhin eine Öffnung 8 zu erkennen, durch die das in den Gassack 1 gelangte Gas beim Auftreffen des Fahrzeuginsassen auf den Gassack 1 ausgeblasen werden kann. Gegebenenfalls sind mehrere solcher Öffnungen 8 vorhanden. Da diese Öffnungen 8 während des Aufblasens des Gassackes 1 nicht verschlossen sind, strömt durch sie in unerwünschter Weise ein erheblicher Teil des an sich zum Aufblähen des Gassackes vorgesehenen Füllgases bereits während des Aufblasvorganges ab.

Der in Figur 1 dargestellte Gassack 1 ist an einem hier nicht dargestellten Gasgenerator befestigt, der in der Nabe eines Lenkrades 9 aufgenommen ist.

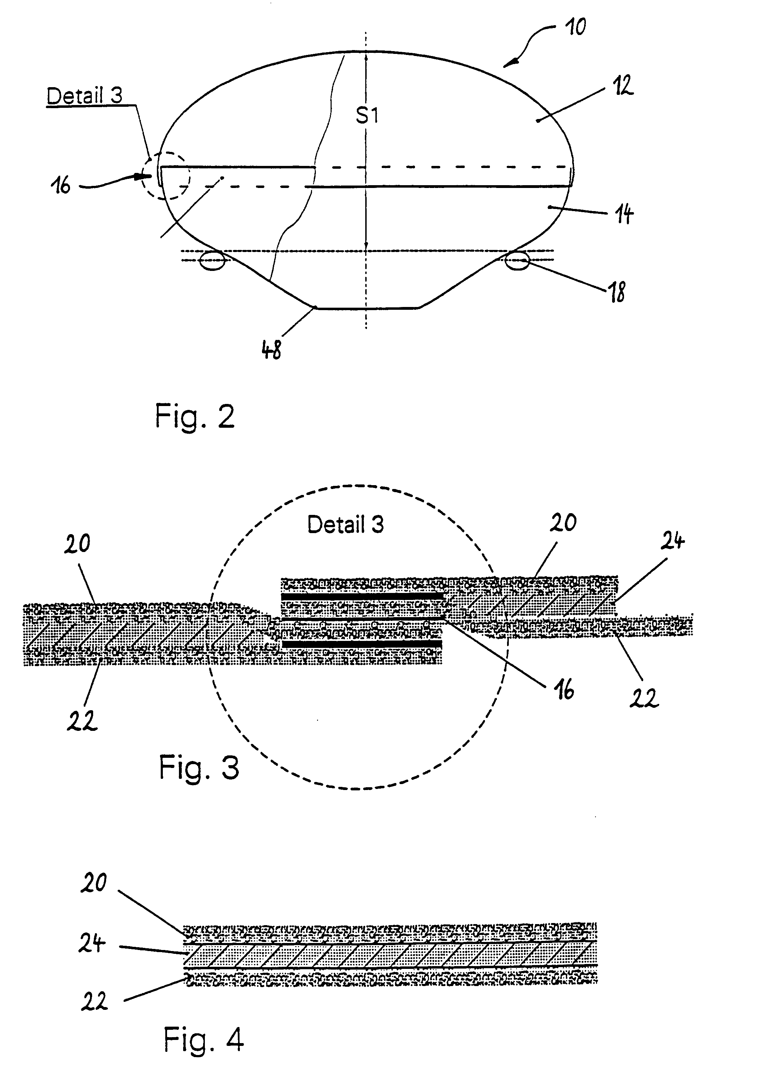

In Figur 2 ist ein erfindungsgemäßer Gassack 10 in aufgeblähtem Zustand dargestellt. Im Gegensatz zum soeben beschriebenen, herkömmlichen Gassack sind bei dem in Figur 2 gezeigten, erfindungsgemäßen Gassack 10 zwei Hälften 12 und 14 mittels des erfindungsgemäßen Verfahrens in die gewünschte Raumform geformt und in dieser Raumform thermisch fixiert worden. Die beiden Hälften 12 und 14 sind im Gegensatz zum Stand der Technik nicht durch eine Nähnaht, sondern durch eine Überlappungs-Verschweißung 16 miteinander verbunden. Eine solche Überlappungs-Verschweißung kann beispielsweise durch Ultra-schallverschweißung erzielt werden. Die Überlappungs-Verschweißung 16 weist eine sehr hohe Festigkeit auf und führt nur zu einer geringen Materialverdickung im Verbindungsbereich, so daß das bisher durch hervorstehende und/oder steife Nähte bestehende Verletzungsrisiko minimiert ist. Der erfindungsgemäße Gassack 10 hat durch seine Herstellungsweise im aufgeblasenen Zustand eine faltenfreie Gestalt. Mit S1 ist der sich im aufgeblasenen Zustand einstellende Funktionsabstand zwischen einer durch den Lenkradkranz 18 definierten Fläche und der maximalen Erstreckung des Gassackes 10 in Richtung auf den Fahrzeuginsassen bezeichnet.

In Figur 3 und Figur 4 ist der Aufbau des Textilverbundmaterials, aus dem der erfindungsgemäße Gassack 10 besteht, näher dargestellt. Das Textilverbundmaterial ist im gezeigten Ausführungsbeispiel dreilagig und besteht aus zwei Lagen 20, 22 aus Textilmaterial, zwischen denen sich eine hier als Kunststoffolie ausgebildete Lage 24 aus Polymermaterial befindet.

Im Verbindungsbereich der beiden Hälften 12 und 14 des Gassackes 10 wird die Lage 24 aus Polymermaterial beispielsweise durch Ultraschall in einen fließfähigen Zustand gebracht, so daß das Polymermaterial die Lagen 20 und 22 aus Textilmaterial durchdringt und sich so mit der jeweils angrenzenden Textilmateriallage der anderen Hälfte 12 oder 14 verbindet. Nach Erkalten des im Überlappungsbereich der beiden Hälften 12 und 14 in den Fließzustand gebrachten Polymermaterials sind die beiden Hälften 12, 14 durch die so erzeugte Überlappungs-Verschweißung 16 fest miteinander verbunden. Da sich die Dikke der Lage 24 aus Polymermaterial beim Verschweißen vermindert, ist der Bereich der Überlappungs-Verschweißung zwischen den Hälften 12 und 14 nur wenig dicker als das sich daran anschließende Textilverbundmaterial.

Figur 4 zeigt nochmals den Aufbau des Textilverbundmaterials im Schnitt. Die Lagen 20 und 22 aus Textilmaterial können voneinander verschieden sein, d.h. aus unterschiedlichen Textilmaterialien bestehen.

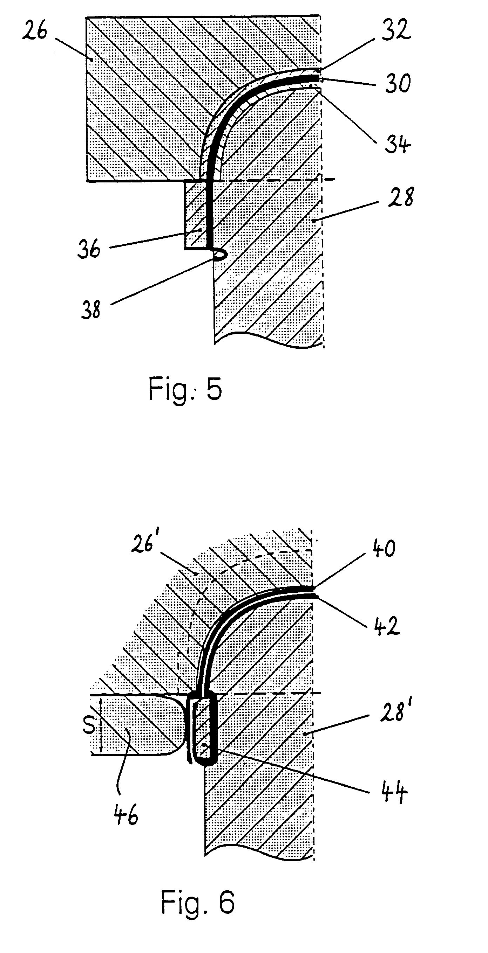

Anhand der Figuren 5 und 6 wird nun das Herstellungsverfahren des Gassacks 10 näher beschrieben. Zur Herstellung des Gassacks 10 wird eine Vorrichtung verwendet, die ein beheiztes Matrizenwerkzeug 26 und ein ebenfalls beheiztes Patrizenwerkzeug 28 aufweist (sh. Fig. 5). Zwischen diese beiden Formwerkzeuge 26 und 28 wird nun zunächst ein Schichtengebilde 30 geführt, das im gezeigten Beispiel aus zwei Lagen 20, 22 aus gewirktem Textilmaterial und einer dazwischen angeordneten Lage 24 aus Polymermaterial in Gestalt einer Kunststoffolie besteht. Die einzelnen Lagen des Schichtengebildes 30 sind anfangs nicht fest miteinander verbunden.

In einem nächsten Schritt werden die beiden beheizten Formwerkzeuge 26, 28 zusammengefahren, um das Schichtengebilde 30 in diejenige Form zu bringen, die der Gassack 10 oder ein Teilabschnitt desselben im aufgeblasenen Zustand später haben soll. In Figur 5 ist die zusammengefahrene Stellung der beiden Formwerkzeuge 26 und 28 am Beispiel der Herstellung einer oberen Hälfte eines Fahrer-Airbags gezeigt. Beim Zusammenfahren der Formwerkzeuge 26 und 28 kann es hilfreich sein, am Matrizenwerkzeug 26 Unterdruck anzulegen, um das Hineingleiten des Schichtengebildes 30 in das Formwerkzeug 26 zu unterstützen. Indem das Schichtengebilde 30 beim Zusammenfahren der Formwerkzeuge 26 und 28 unter einem definierten Gegenzug gehalten wird, können die sich zwischen den beiden Formwerkzeugen 26 und 28 befindenden Lagen 20 und 22 aus Textilmaterial bis auf eine vorgegebene Restdehnfähigkeit verstreckt werden.

Wichtig ist, daß in der zusammengefahrenen Endstellung der beiden Formwerkzeuge 26 und 28 kein zu starker Preßdruck auf das Schichtengebilde 30 ausgeübt wird, damit dessen textile Eigenschaften möglichst weitgehend erhalten bleiben. Zwischen den Heizschichten 32 und 34 der beiden Formwerkzeuge 26 und 28 befindet sich deshalb auch in der zusammengefahrenen Endstellung ein definierter Spalt, dessen Spaltweite in Abhängigkeit vom Aufbau des jeweiligen Schichtengebildes 30 abhängt.

In der in Figur 5 wiedergegebenen Stellung der Formwerkzeuge 26 und 28 wird das Schichtengebilde 30 gleichzeitig in der durch die Formwerkzeuge 26 und 28 vorgegebenen Raumform thermisch fixiert und zu einem textilen Verbundmaterial geformt. Dies wird dadurch erreicht, daß die Temperatur der Formwerkzeuge 26 und 28 so gewählt wird, daß einerseits die beiden Lagen 20 und 22 nur so weit erhitzt werden, daß sie ähnlich einem Bügelvorgang faltenfrei die durch die Formwerkzeuge 26 und 28 vorgegebene Form annehmen, die Temperatur andererseits jedoch dazu ausreicht, die polymere Zwischenlage 24 an den beiden Lagen 20 und 22 aus Textilmaterial anzuschmelzen. Es hat sich als vorteilhaft herausgestellt, das Polymermaterial der Lage 24 so zu wählen, daß sein Schmelzbereich nur wenig, also etwa 20 bis 40°C, unter dem Schmelzbereich des Textilmaterials liegt.

Nach dem beschriebenen Form- und Fixiervorgang wird das gebildete, textile Formteil mittels eines konzentrisch zum Patrizenwerkzeug 28 angeordneten Rings 36 und einer im Patrizenwerkzeug 28 vorhandenen Umfangsnut 38 exakt auf das gewünschte Maß gebracht, indem ein hier nicht dargestelltes Messer in die Umfangsnut 38 eingreift und so einen überschüssigen Rand abschneidet. Alternativ kann dieses exakte Zurichten beispielsweise auch mittels eines in das Patrizenwerkzeug 28 eingelassenen Widerstandsdrahtes geschehen, der kurzzeitig erhitzt wird und so den überschüssigen Rand abschmilzt. Nach dem Zurichtungsvorgang werden die beiden Formwerkzeuge 26 und 28 wieder auseinandergefahren und das textile Formteil, im gezeigten Beispiel eine Gassackhälfte, kann entnommen werden. Das textile Formteil ist weich und geschmeidig wie eine Textilie und läßt sich daher hervorragend falten.

In Figur 6 ist dargestellt, wie zwei separat hergestellte Gassackhälften miteinander verbunden werden. Hierzu wird zunächst eine untere Gassackhälfte 40 in ein Matrizenwerkzeug 26' eingelegt und sodann eine obere Gassackhälfte 42 nach innen gestülpt auf die untere Gassackhälfte 40 gelegt. Ein aus Stahl oder PTFE bestehendes, ringförmiges Losteil 44 wird im Verbindungsbereich zwischen oberer Gassackhälfte 42 und unterer Gassackhälfte 40 angeordnet, so daß sich auf der radial äußeren Umfangsfläche dieses Losteiles 44 die Ränder von oberer Gassackhälfte 42 und unterer Gassackhälfte 40 überlappen. In Figur 6 ist dies durch einen kleinen Spalt zwischen den sich überlappenden Rändern schematisch angedeutet.

Sodann werden beispielsweise mit einer Ultraschallsonotrode 46 und dem Losteil 44 als Gegenlager die beiden sich überlappenden Ränder von oberer und unterer Gassackhälfte miteinander verschweißt. Die beiden Gassackhälften 40 und 42 sind dann miteinander zum Gassack 10 verbunden, und es braucht nach dem Auseinanderfahren der Formwerkzeuge 26', 28' nur noch das Losteil 44 durch die Gasgeneratoranschlußöffnung des gebildeten Gassackes 10 entnommen zu werden.

Mit dem beschrieben Herstellungsverfahren lassen sich Gassackhälften 40 und 42 mit genau definierter Gasdurchlässigkeit herstellen, indem die Temperatur der beiden Formwerkzeuge 26 und 28 auch örtlich genau geregelt wird. Alternativ oder auch zusätzlich kann das Matrizenwerkzeug 26 Nadeln aufweisen, die das gebildete, textile Verbundmaterial nachträglich perforieren (nicht dargestellt). Mit dem beschriebenen Herstellungsverfahren ist es daher möglich, Gassäcke 10 mit einer individuell auf die Gassackform und auf einen bestimmten Fahrzeugtyp abgestimmten, auch örtlich verschiedenen Gasdurchlässigkeit zu fertigen, so daß die Aufprallenergie eines Fahrzeuginsassen optimal aufgenommen und gedämpft werden kann. Des weiteren kann ohne spezielle Düsen die Filterwirkung des Gassackes 10 so eingestellt werden, daß sowohl eine optimale Dynamik beim Aufblasvorgang erreicht wird als auch das Eindringen schädlicher Gase in den Bereich der Insassen weitgehend vermieden wird.

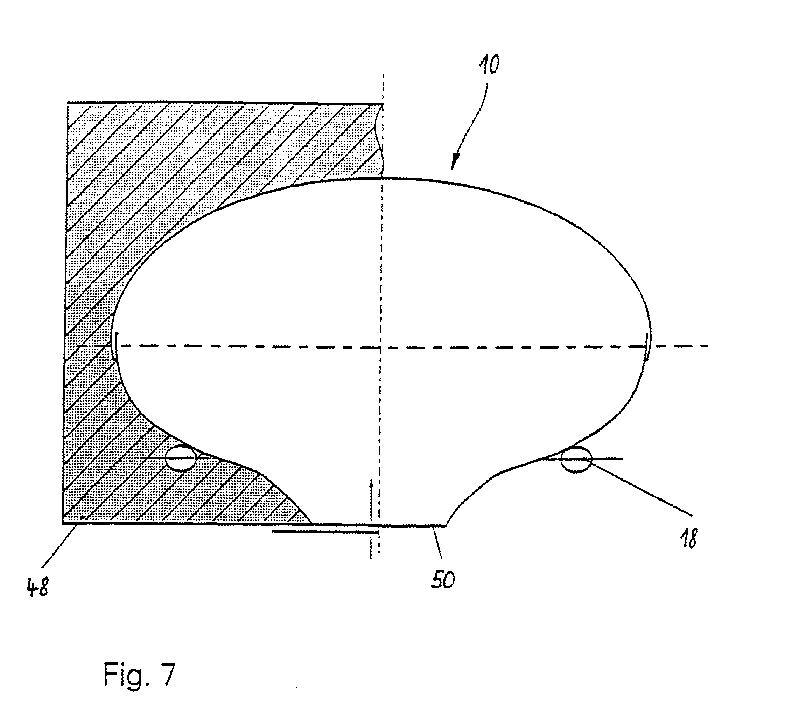

Figur 7 zeigt abschließend eine Möglichkeit, einen Gassack 10 einteilig und ohne Schweißverbindung herzustellen. Hierzu wird das Schichtengebilde in eine der gewünschten Gassackgestalt entsprechende Hohlform 46 gesaugt bzw. geblasen und es wird dann durch die Gasgeneratoranschlußöffnung 48 Heißluft in den Gassack 10 geblasen, so daß sich die einzelnen Schichten des Schichtengebildes an die Hohlfläche der Hohlform 46 anlegen und dort thermisch fixiert sowie zum Verbundmaterial laminiert werden. Sodann wird durch die Gasgeneratoranschlußöffnung 48 Kühlluft eingeblasen und der fertige Gassack 10 entnommen.

## Patentansprüche

1. Aufblasbarer Gassack (10) für ein Insassenrückhaltesystem in einem Fahrzeug, insbesondere Kraftfahrzeug, wobei
- der Gassack (10) aus einem mehrlagigen Textilverbundmaterial besteht, welches zumindest eine Lage (20) aus einem Textilmaterial und eine Lage (24) aus einem Polymermaterial umfaßt, dessen Schmelzbereich niedriger als der Schmelzbereich des Textilmaterials ist,
**dadurch gekennzeichnet, daß**
- das Textilverbundmaterial in eine vorgegebene Raumform geformt ist, die beim Aufblasen des Gassackes (10) entstehen soll, und
- die einzelnen Lagen (20, 24) des Textilverbundmaterials in dieser Raumform miteinander verbunden worden sind.

2. Gassack nach Anspruch 1,
**dadurch gekennzeichnet, daß** er aus mehreren Teilabschnitten (12, 14) besteht, die in einen Teil der Raumform des Gassackes (10) geformt und in der Raumform des Gassackes (10) miteinander verbunden sind, insbesondere durch eine Überlappungs-Verschweißung (16).

3. Gassack nach Anspruch 2,
**dadurch gekennzeichnet, daß** das Textilmaterial der einzelnen Teilabschnitte (12, 14) voneinander verschieden ist.

4. Gassack nach einem der Ansprüche 1 bis 3,
**dadurch gekennzeichnet, daß** die Lage (24) aus Polymermaterial durch eine Kunststofffolie oder durch ein Vlies gebildet ist.

5. Gassack nach Anspruch 4,
**dadurch gekennzeichnet, daß** die Lage (24) aus Polymermaterial mehrere Schichten umfaßt, insbesondere zwei dünne Schichten Schmelzkleber und eine dazwischenliegende Schicht aus einer Kunststofffolie.

6. Gassack nach einem der Ansprüche 1 bis 5,
**dadurch gekennzeichnet, daß** das Textilverbundmaterial wenigstens zwei Lagen (20, 22) aus Textilmaterial umfaßt, zwischen denen sich die Lage (24) aus Polymermaterial befindet.

7. Gassack nach Anspruch 6,
**dadurch gekennzeichnet, daß** die wenigstens zwei Lagen (20, 22) aus Textilmaterial aus voneinander unterschiedlichen Textilmaterialien bestehen.

8. Gassack nach einem der vorhergehenden Ansprüche,
**dadurch gekennzeichnet, daß** das Textilmaterial ein Gestrick, Gewirk oder Gewebe ist.

9. Gassack nach einem der vorhergehenden Ansprüche,
**dadurch gekennzeichnet, daß** das Flächengewicht des Textilverbundmaterials ca. 100 g/m² bis ca. 150 g/m² beträgt.

10. Gassack nach einem der vorhergehenden Ansprüche,
**dadurch gekennzeichnet, daß** das Textilverbundmaterial eine druckabhängig definierte, örtlich unterschiedliche Gaspermeabilität aufweist.

11. Gassack nach einem der vorhergehenden Ansprüche,
**dadurch gekennzeichnet, daß** das Textilverbundmaterial eine richtungsabhängig definierte Restelastizität aufweist.

12. Gassack nach einem der vorhergehenden Ansprüche,
**dadurch gekennzeichnet, daß** das Textilmaterial und das Polymermaterial aus dem gleichen Werkstoff bestehen.

13. Verfahren zur Herstellung eines textilen Formteils, insbesondere eines aufblasbaren Gassackes gemäß einem der vorhergehenden Ansprüche,
**dadurch gekennzeichnet, daß** ein Schichtengebilde aus zumindest einer Lage Textilmaterial und einer Lage Polymermaterial, dessen Schmelzbereich niedriger als der Schmelzbereich des Textilmaterials ist, mittels beheizter Formwerkzeuge in zumindest einen Teilabschnitt einer vorgegebenen Raumform geformt wird, beispielsweise die beim Aufblasen eines Gassackes entstehende Raumform, und sodann thermisch in diesem Zustand fixiert und gleichzeitig zu einem Textilverbundmaterial laminiert wird.

14. Verfahren nach Anspruch 13,
**dadurch gekennzeichnet, daß** Teilabschnitte der gewünschten Raumform in der gewünschten Raumform miteinander verbunden werden, insbesondere durch Überlappungs-Verschweißen.

15. Verfahren nach Anspruch 13 oder 14,
**dadurch gekennzeichnet, daß** die Lage aus Polymermaterial durch eine Kunststofffolie oder durch ein Vlies gebildet ist.

16. Verfahren nach einem der Ansprüche 13 bis 15,
**dadurch gekennzeichnet, daß** das Schichtengebilde wenigstens zwei Lagen aus Textilmaterial umfaßt, zwischen denen sich die Lage aus Polymermaterial befindet.

17. Verfahren nach Anspruch 16,
**dadurch gekennzeichnet, daß** daß die wenigstens zwei Lagen aus Textilmaterial aus voneinander unterschiedlichen Textilmaterialien bestehen.

18. Verfahren nach einem der Ansprüche 13 bis 17,
**dadurch gekennzeichnet, daß** das Textilmaterial ein Gestrick, Gewirk oder Gewebe ist.

19. Verfahren nach einem der Ansprüche 13 bis 18,
**dadurch gekennzeichnet, daß** das Flächengewicht des Textilverbundmaterials ca. 100 g/m² bis ca. 150 g/m² beträgt.

20. Verfahren nach einem der Ansprüche 13 bis 19,
**dadurch gekennzeichnet, daß** das thermische Fixieren durch chemische Hilfsstoffe unterstützt wird.

21. Verfahren nach einem der Ansprüche 13 bis 20,
**dadurch gekennzeichnet, daß** das thermische Fixieren durch mechanische Reibbewegungen der Formwerkzeuge unterstützt wird.

22. Verfahren nach einem der Ansprüche 13 bis 21,
**dadurch gekennzeichnet, daß** beim Form-, Fixier- und Laminiervorgang die Temperatur der Formwerkzeuge örtlich so gesteuert wird, daß das entstehende Textilverbundmaterial eine definierte, örtlich unterschiedliche Gaspermeabilität aufweist.

23. Verfahren nach einem der Ansprüche 13 bis 22,
**dadurch gekennzeichnet, daß** beim Form-, Fixier- und Laminiervorgang eine gezielte, mechanische Perforation erfolgt.

24. Verfahren nach einem der Ansprüche 13 bis 23,
**dadurch gekennzeichnet, daß** das Textilmaterial und das Polymermaterial aus dem gleichen Werkstoff bestehen.

25. Textiles Formteil, das aus einem mehrlagigen Textilverbundmaterial besteht, welches zumindest eine Lage (20) aus einem Textilmaterial und eine Lage (24) aus einem Polymermaterial umfaßt, dessen Schmelzbereich niedriger als der Schmelzbereich des Textilmaterials ist,
**dadurch gekennzeichnet, daß** das textile Formteil durch ein Verfahren gemäß einem der Ansprüche 13 bis 24 hergestellt ist, wobei
- das Textilverbundmaterial in eine vorgegebene Raumform geformt ist, und
- die einzelnen Lagen (20, 24) des Textilverbundmaterials in dieser Raumform miteinander verbunden worden sind.

26. Gasgenerator/Gassack-Modul für ein Insassenrückhaltesystem eines Fahrzeuges, **gekennzeichnet durch** einen Gassack (10) gemäß einem der Ansprüche 1 bis 12.

## Claims

1. An inflatable gas bag (10) for an occupant restraint system in a vehicle, in particular a motor vehicle, where
- the gas bag (10) consists of a multilayered textile composite material which comprises at least one layer (20) of a textile material and one layer (24) of a polymer material whose melting range is lower than the melting range of the textile material,
**characterised in that**
- the textile composite material is formed into a predetermined three-dimensional shape which is to develop during inflation of the gas bag (10), and
- the individual layers (20, 24) of the textile composite material have been joined in this three-dimensional shape.

2. The gas bag according to Claim 1,
**characterised in that** it consists of several partial sections (12, 14) which are formed into one part of the three-dimension shape of the gas bag (10) and are joined in the three-dimensional shape of the gas bag (10), in particular by means of a lap seal (16).

3. The gas bag according to Claim 2,
**characterised in that** the textile materials of the individual partial sections (12, 14) are different from one another.

4. The gas bag according to one of Claims 1 to 3,
**characterised in that** the layer (24) of polymer material is formed by a plastic film or a fleece.

5. The gas bag according to Claim 4,
**characterised in that** the layer (24) of polymer material comprises several layers, in particular two thin layers of melting adhesive and an intermediate layer of a plastic film.

6. The gas bag according to one of Claims 1 to 5,
**characterised in that** the textile composite material comprises at least two layers (20, 22) of textile material between which the layer (24) of polymer material is arranged.

7. The gas bag according to Claim 6,
**characterised in that** the at least two layers (20, 22) of textile material consist of textile materials which are different from one another.

8. The gas bag according to one of the previous claims,
**characterised in that** the textile material is a knitted fabric, a warp-knitted fabric, or a woven fabric.

9. The gas bag according to one of the previous claims,
**characterised in that** the mass per unit area of the textile composite material ranges from approx. 100 g/m² to approx. 150 g/m².

10. The gas bag according to one of the previous claims,
**characterised in that** the textile composite material has a pressure-dependently defined, locally different gas permeability.

11. The gas bag according to one of the previous claims,
**characterised in that** the textile composite material has a direction-dependently defined residual elasticity.

12. The gas bag according to one of the previous claims,
**characterised in that** the textile material and the polymer material consist of the same material.

13. A method for the manufacture of a textile formed part, especially an inflatable gas bag according to one of the previous claims,
**characterised in that** a layered object of at least one layer of textile material and one layer of polymer material whose melting range is lower than the melting range of the textile material is formed by means of heated forming tools into at least a partial section of a specified three-dimensional shape, for example the three-dimensional shape resulting during inflation of a gas bag, is then thermally set in this state and simultaneously laminated to a textile composite material.

14. The method according to Claim 13,
**characterised in that** partial sections of the desired three-dimensional shape are joined together in the desired three-dimensional shape, in particular by lap sealing.

15. The method according to Claim 13 or 14,
**characterised in that** the layer of polymer material is formed by a plastic film or a fleece.

16. The method according to one of Claims 13 to 15,
**characterised in that** the layered object comprises at least two layers of textile material between which the layer of polymer material is arranged.

17. The method according to Claim 16,
**characterised in that** the at least two layers consist of textile material of textile materials different from each other.

18. The method according to one of Claims 13 to 17,
**characterised in that** the textile material is a knitted fabric, a warp-knitted fabric, or a woven fabric.

19. The method according to one of Claims 13 to 18,
**characterised in that** the mass per unit area of the textile composite material ranges from approx. 100 g/m² to approx. 150 g/m².

20. The method according to one of Claims 13 to 19,
**characterised in that** the thermal setting is assisted by chemical auxiliary substances.

21. The method according to one of Claims 13 to 20,
**characterised in that** the thermal setting is assisted by mechanical rubbing movements of the forming tools.

22. The method according to one of Claims 13 to 21,
**characterised in that** during the forming, thermal setting and laminating process the temperature of the forming tools is locally controlled in such a manner that the resulting textile composite material has a defined, locally different gas permeability.

23. The method according to one of Claims 13 to 22,
**characterised in that** during the forming, thermal setting and laminating process a precise mechanical perforation is carried out.

24. The method according to one of Claims 13 to 23,
**characterised in that** the textile material and the polymer material consist of the same material.

25. A textile formed part consisting of a multilayered textile composite material which comprises at least one layer (20) of a textile material and one layer (24) of a polymer material whose melting range is lower than the melting range of the textile material,
**characterised in that** the textile formed part is manufactured by a method according to one of Claims 13 to 24, where
- the textile composite material is formed into a predetermined three-dimensional shape, and
- the individual layers (20, 24) of the textile composite material have been joined in this three-dimensional shape.

26. A gas generator/gas bag module for an occupant restraint system of a vehicle, **characterised by** a gas bag (10) according to one of Claims 1 to 12.

## Revendications

1. Sac à gaz gonflable (10) pour un système de retenue des passagers dans un véhicule, en particulier dans un véhicule automobile, dans lequel :
- le sac à gaz (10) est constitué en un matériau composite textile à plusieurs couches, qui comprend au moins une couche (20) en un matériau textile et une couche (24) en un matériau polymère, dont la plage de fusion est inférieure à la plage de fusion du matériau textile,
**caractérisé en ce que** :
- le matériau composite textile est mis en forme tridimensionnelle prédéterminée censée se produire lors du gonflage du sac à gaz (10), et
- les couches individuelles (20, 24) du matériau composite textile ont été reliées entre elles sous cette forme tridimensionnelle.

2. Sac à gaz selon la revendication 1, **caractérisé en ce qu'**il est constitué par plusieurs tronçons partiels (12, 14) qui sont mis en forme dans une partie de la forme tridimensionnelle du sac à gaz (10) et qui sont reliés entre eux dans la forme tridimensionnelle du sac à gaz (10), en particulier par un soudage en chevauchement (16).

3. Sac à gaz selon la revendication 2, **caractérisé en ce que** les matériaux textiles des tronçons partiels individuels (12, 14) diffèrent entre eux.

4. Sac à gaz selon l'une quelconque des revendications 1 à 3, **caractérisé en ce que** la couche (24) en matériau polymère est formée par un film en matière plastique ou par une nappe.

5. Sac à gaz selon la revendication 4, **caractérisé en ce que** la couche (24) en matériau polymère comprend plusieurs sous-couches, en particulier deux sous-couches minces en colle fusible et une sous-couche interposée en film de matière plastique.

6. Sac à gaz selon l'une quelconque des revendications 1 à 5, **caractérisé en ce que** le matériau composite textile comprend au moins deux couches (20, 22) en matériau textile entre lesquelles se trouve une couche (24) en matériau polymère.

7. Sac à gaz selon la revendication 6, **caractérisé en ce que** lesdites au moins deux couches (20, 22) en matériau textile sont constituées en matériaux textiles qui diffèrent entre eux.

8. Sac à gaz selon l'une quelconque des revendications précédentes, **caractérisé en ce que** le matériau textile est un textile tricoté, non tissé ou tissé.

9. Sac à gaz selon l'une quelconque des revendications précédentes, **caractérisé en ce que** le poids superficiel du matériau composite textile est d'environ 100 g/m² jusqu'à environ 150 g/m².

10. Sac à gaz selon l'une quelconque des revendications précédentes, **caractérisé en ce que** le matériau composite textile présente une perméabilité aux gaz définie en fonction de la pression et localement différente.

11. Sac à gaz selon l'une quelconque des revendications précédentes, **caractérisé en ce que** le matériau composite textile présente une élasticité résiduelle définie en fonction de la direction.

12. Sac à gaz selon l'une quelconque des revendications précédentes, **caractérisé en ce que** le matériau textile et le matériau polymère sont constitués de la même substance.

13. Procédé pour réaliser une pièce conformée textile, en particulier un sac à gaz gonflable selon l'une quelconque des revendications précédentes, **caractérisé en ce que** l'on forme une structure en couches constituée par au moins une couche de matériau textile et une couche de matériau polymère dont la plage de fusion est inférieure à la plage de fusion du matériau textile, au moyen d'outils de formage chauffés dans au moins un tronçon partiel d'une forme tridimensionnelle prédéterminée, par exemple la forme tridimensionnelle qui se forme lors du gonflage d'un sac à gaz, et ensuite ladite structure est fixée thermiquement dans cet état et stratifiée simultanément pour former un matériau composite textile.

14. Procédé selon la revendication 13, **caractérisé en ce que** des tronçons partiels de la forme tridimensionnelle désirée sont reliés entre eux dans la forme tridimensionnelle désirée, en particulier par soudage en chevauchement.

15. Procédé selon l'une ou l'autre des revendications 13 et 14, **caractérisé en ce que** la couche en matériau polymère est formée par un film en matière plastique ou par une nappe.

16. Procédé selon l'une quelconque des revendications 13 à 15, **caractérisé en ce que** la structure en couches comprend au moins deux couches en matériau textile entre lesquelles se trouve la couche en matériau polymère.

17. Procédé selon la revendication 16, **caractérisé en ce que** lesdites au moins deux couches en matériau textile sont constituées en matériaux textiles qui diffèrent entre eux.

18. Procédé selon l'une quelconque des revendications 13 à 17, **caractérisé en ce que** le matériau textile est un textile tricoté, non tissé ou tissé.

19. Procédé selon l'une quelconque des revendications 13 à 18, **caractérisé en ce que** le poids superficiel du matériau composite textile est d'environ 100 g/m² jusqu'à environ 150 g/m².

20. Procédé selon l'une quelconque des revendications 13 à 19, **caractérisé en ce que** la fixation thermique est assistée par des agents auxiliaires chimiques.

21. Procédé selon l'une quelconque des revendications 13 à 20, **caractérisé en ce que** la fixation thermique est assistée par des mouvements de friction mécaniques des outils de formage.

22. Procédé selon l'une quelconque des revendications 13 à 21, **caractérisé en ce que** lors de l'opération de formage, de fixation et de stratification, la température des outils de formage est commandée localement de telle sorte que le matériau composite textile qui se forme présente une perméabilité aux gaz définie localement différente.

23. Procédé selon l'une quelconque des revendications 13 à 22, **caractérisé en ce que** lors de l'opération de formage, de fixation et de stratification, on procède à une perforation mécanique ciblée.

24. Procédé selon l'une quelconque des revendications 13 à 23, **caractérisé en ce que** le matériau textile et le matériau polymère sont constitués de la même substance.

25. Pièce textile mise en forme qui est constituée en un matériau composite textile à plusieurs couches, qui comprend au moins une couche (20) en un matériau textile et une couche (24) en un matériau polymère, dont la plage de fusion est inférieure à la plage de fusion du matériau textile,
**caractérisée en ce que** la pièce textile mise en forme est réalisée par un procédé selon l'une quelconque des revendications 13 à 24,
dans laquelle :
- le matériau composite textile est mis en forme tridimensionnelle prédéterminée, et
- les couches individuelles (20, 24) du matériau composite textile ont été reliées entre elles sous cette forme tridimensionnelle.

26. Module générateur de gaz/sac à gaz pour un système de retenue des passagers d'un véhicule, **caractérisé par** un sac à gaz (10) selon l'une quelconque des revendications 1 à 12.
